# EUROPÄISCHE PATENTSCHRIFT

(11) **EP 1 658 206 B1**
(45) Veröffentlichungstag und Bekanntmachung des Hinweises auf die Patenterteilung: **17.01.2007**
(21) Anmeldenummer: 04762643.7
(22) Anmeldetag: 11.08.2004
(51) Int. Cl.: B60R 22/14, B64D 25/06, B60R 22/41

(54) **POSITIONSSICHERUNG FÜR PERSONEN IN LAND- UND LUFTFAHRZEUGEN**
SYSTEM FOR SECURING THE POSITION OF PEOPLE IN LANDCRAFT AND AIRCRAFT
DISPOSITIF POUR SECURISER LA POSITION DE PERSONNES DANS DES VEHICULES ROUTIERS ET DES A RONEFS

(30) Priorität: 29.08.2003 DE 10340237
(43) Veröffentlichungstag der Anmeldung: 24.05.2006
(73) Patentinhaber: Schroth Safety Products GmbH, 59757 Arnsberg (DE)
(72) Erfinder: NÖHREN, Hubert, 22523 Hamburg (DE); SCHROTH, Carl-Jürgen, 59759 Arnsberg (DE); MEIER-ARNDT, Stefan, 59174 Kamen (DE)
(74) Vertreter: Griepenstroh, Jörg
(86) Internationale Anmeldenummer: PCT/DE2004/001798
(87) Internationale Veröffentlichungsnummer: WO 2005/023607

(56) Entgegenhaltungen:
- EP-A- 1 245 487
- US-A- 2 708 555
- US-A- 5 544 363

## Beschreibung

Die Erfindung betrifft eine Positionssicherung für abwechselnd sitzende und stehende Personen in Land- und Luftfahrzeugen gemäß den Merkmalen des Anspruchs 1.

In Land- und Luftfahrzeugen, insbesondere solchen, die zur Rettung und zum Transport von Verletzten vorgesehen sind, wie beispielsweise Notarztwagen oder Rettungshubschrauber, gibt es für die hierin beschäftigten Einsatzkräfte Situationen, in denen sie sowohl in einer sitzenden Position als auch in einer stehenden Position diverse Tätigkeiten durchführen müssen. Dabei wird angestrebt, dass die Einsatzkräfte in beiden Positionen sowohl im eigenen Interesse als auch im Interesse der zu betreuenden Menschen gesichert sind. Auch bei einem Wechsel von einer sitzenden in eine stehende Position und umgekehrt dürfen die Einsatzkräfte nicht gefährdet sein. Dies ist beispielsweise dann der Fall, wenn bei einem Landfahrzeug eine unverhoffte Bremsung oder bei einem Luftfahrzeug eine Flugbewegung mit einer abrupten Änderungen der Flugrichtung erfolgt. Bei all diesen Bewegungen der Fahrzeuge dürfen die Einsatzkräfte einerseits durch das angelegte Gurtzeug in ihren Tätigkeiten nicht behindert werden und müssen andererseits einwandfrei lagegesichert sein.

Das zum Einsatz gelangende Gurtzeug besteht bei den hier angesprochenen Land- und Luftfahrzeugen in der Regel aus einem zweigeteilten Beckengurt, zwei Oberschenkelgurten, einem Gesäßgurt, zwei Schultergurten, einem Rückengurt und einem bauchseitigen Zentralverschluss. Den Beckengurthälften sowie den Schultergurten sind Retraktoren zugeordnet, welche in der internationalen Fachsprache Emergency Locking Retractor (ELR) genannt werden. Die gesamte Positionssicherung, bestehend aus Gurtzeug und Retraktoren, nennt man in der Fachsprache High Mobility Restraint (HMR).

Bei den bekannten HMR können die Einsatzkräfte durchaus jederzeit die sitzende Position verlassen und sich auch wieder hinsetzen, ohne dass das Gurtzeug abgelegt werden muss. Die hierbei zur Anwendung gelangenden, insbesondere die den Beckengurthälften zugeordneten Retraktoren weisen aber die Eigenschaft auf, dass die in die Retraktoren eingeführten und hier spiralförmig aufgewickelten Enden der Gurte bei einer außergewöhnlichen Bewegung des jeweiligen Fahrzeugs über eine Sensorik erst einmal eine Beschleunigung der Gurte erkennen müssen. Erst dann werden die Retraktoren verriegelt, um ein weiteres Abwickeln der Gurte zu verhindern und somit eine Rückhaltewirkung zu erzielen.

Dieser Ablauf von Vorgängen führt aufgrund des so genannten "Filmspuleneffekts" der spiralförmig aufgewickelten Gurtenden meistens zu einer ungewollten Verlängerung der Gurte mit dem Ergebnis, dass das Gurtzeug dann nicht mehr, wie beabsichtigt, die Person eng umschließt und sie dadurch direkt an das Fahrzeug anbindet. Die Person ist vielmehr weitgehend ungeschützt den abrupten Verzögerungen und Beschleunigungen ausgesetzt. Diese Eigenschaften sind insbesondere bei den Beckengurthälften zu beobachten, die bedingt durch die Masseverteilung eines menschlichen Körpers während einer abrupten Bewegung eines Fahrzeugs und damit einhergehender höherer Verzögerung oder Beschleunigung besonders stark belastet werden. Solche hohen Beanspruchungen führen daher automatisch zu größeren Dehnungen der Gurte, was letztlich unakzeptabel große Verlagerungen der Beckenpartien der Einsatzkräfte zur Folge hat.

Nun wäre es denkbar, eine relative Verbesserung dadurch zu erreichen, dass in die Retraktoren Sensoren eingegliedert werden, welche direkt die Verzögerung oder Beschleunigung eines Fahrzeugs messen und im Falle einer Überschreitung eines vorgegebenen Grenzwerts eine Sperrfunktion der Retraktoren herbeiführen. Solche bekannten Sensoren besitzen eine sogenannte "Nulllage", von der aus die Verzögerungen und Beschleunigungen der Fahrzeuge eingemessen werden.

Da die Einwirkung einer Geschwindigkeitsänderung auf einen Sensor auch einer bestimmten Winkellage entspricht, muss ein Retraktor mit einem derartigen Sensor fest am Fahrzeug montiert werden.

Mit Rücksicht auf die unterschiedlichsten Anwendungen der bekannten HMR ist die Montage der ELR an den Sitzstrukturen der Fahrzeuge und hier in unterschiedlichen Winkellagen erforderlich. Eine jede Winkellage eines Retraktors würde folglich eine individuelle Lage des jeweiligen Sensors erfordern und daher unpraktikabel sein.

Weiterhin erfolgt die Benutzung des Gurtzeugs in sitzender und in stehender Position mit unterschiedlichen Winkeln, unter denen die Gurte in den jeweiligen Montagepositionen aus den Retraktoren abgezogen werden. Solche unterschiedlichen Winkellagen erfordern aufwändige Gurtführungen, um stets ein faltenloses Einführen der Gurte in die Retraktoren zu gewährleisten.

Eine einfache Lösung dieses Problems wäre das Nachführen der Retraktoren in die jeweilige Abzugsrichtung der Gurte. Hierbei würde sich aber die Einbaulage eines Sensors aus der vorbestimmten Nulllage entfernen, was dann zu einer erhöhten Empfindlichkeit bis hin zur möglichen Dauersperrung des Gurts in eine Richtung führt. Ein derartiger Lösungsvorschlag wäre demnach als undefiniert zu beurteilen und unter den Gesichtspunkten einer sicheren Nutzung sowie der nationalen und internationalen Zulassungsvorschriften nicht akzeptabel.

Darüber hinaus ist es vorstellbar, in Landfahrzeugen integrierte HMR mit elektrisch angesteuerten Sperrmechanismen zu versehen, die durch extern und lagefest montierte Sensoren angesteuert werden. Ein solcher Vorschlag kann indessen in der Luftfahrt nicht akzeptiert werden. Es müsste eine Stromversorgung bereitgestellt werden, die in das Bordnetz des Luftfahrzeugs eingreift. Dies wäre mit extrem hohen Auflagen verbunden. Außerdem ist hierbei zu berücksichtigen, dass die Sitze in Luftfahrzeugen, für die ein HMR in Frage kommt, häufig um 360° drehbar sind. Hier wäre eine Stromzufuhr per Kabel sehr störanfällig. Schleifringübertrager wären zwar denkbar, indessen viel zu aufwändig.

Zur Lösung der anstehenden Probleme könnten theoretisch auch solche Retraktoren eingesetzt werden, die unter bestimmten Einsatzbedingungen dauerhaft sperren und Gurte nur noch aufwickeln, aber nicht mehr freigeben. Derartige Retraktoren werden in der internationalen Fachsprache Automatic Locking Retractor (ALR) genannt und sind beispielsweise in der EP 1 245 487 A2 beschrieben.

Die Gurtanordnung umfasst ein Hüftgurtsystem, das einmal angelegt an der Person verbleibt, sowie ein Sitzgurtsystem, das einem Sitz des Fahrzeugs zugeordnet ist.

Das Hüftgurtsystem setzt sich aus einem längenveränderbaren Bauchgurt, aus mit dem Bauchgurt verbundenen 1.ängenveränderbaren Beingurten, aus einem zwischen den vorderen Abschnitten der Beingurte angeordneten und mit diesen verbundenen Querstreifen sowie einem in diesen Querstreifen integrierten Zentralverschluss zusammen, der außerdem über einen Vertikalstreifen mit dem Bauchgurt verbunden ist. Das Hüftgurtsystem wird durch einen Rückengurt ergänzt, der rückseitig der Person den Bauchgurt mit den rückwärtigen Abschnitten der Beingurte verbindet, um hier ein vertikales Auseinanderrutschen des Bauchgurts und der Beingurte zu verhindern.

Das Sitzgurtsystem umfasst zwei im unteren Höhenbereich des Sitzes über Retraktoren festgelegte Beckengurte. Diese sind über Verschlusszungen in den Zentralverschluss des Hüftgurtsystems einführbar. Des Weiteren ist dem Sitz im oberen Höhenbereich ein Anschnallgurt zugeordnet, der ebenfalls über einen Retraktor mit dem Sitz verbunden ist. Der Anschnallgurt ist im Nackenbereich der Person mit zwei Körpergurten verbunden, die längenverstellbar sind und über Verschlusszungen in den Zentralverschluss des Hüftgurtsystems eingesteckt werden können.

Die bekannte Gurtanordnung besteht also aus einem Hüftgurtsystem, das an der Person verbleibt, sowie einem hiervon unabhängigen Sitzgurtsystem, das einem Sitz eines Fahrzeugs zugeordnet ist. Die Kopplung der beiden Systeme erfolgt über den Zentralverschluss am Hüftgurtsystem.

Bei ALR, die für einen Einsatz in einem HMR abgestimmt sind, müssten bei einer sitzenden Person die Retraktoren entriegelt sein. Dies ist sicherheitstechnisch aber nicht akzeptabel. Auch könnten diese Retraktoren so ausgebildet sein, dass sie permanent gesperrt sind und nur durch eine gezielte Betätigung entriegelt werden, damit Gurte freigegeben werden und die Personen von ihren Sitzen aufstehen können. ALR sperren aber das weitere Abwickeln der Gurte von den Retraktoren, sobald die Personen nur eine kleine Rückwärtsbewegung durchgeführt haben und somit eine geringe Strecke an Gurten aufgewickelt wurde. Dies hat zur Folge, dass die Personen keine Bewegung nach vorne machen können. Eine Bewegung ist nur noch in Richtung der Sitze möglich. Demzufolge ist eine solche Sperrsituation eines ALR erkennbar nicht praktikabel.

Wie vorstehend bereits angedeutet, haben alle bekannten Ausführungen von Retraktoren die Eigenart, dass sie Gurte spiralförmig aufwickeln und speichern. Bedingt durch die nur begrenzte Rückzugskraft der in den Retraktoren vorgesehenen Wickelfedern, der Eigensteifigkeit der Gurte sowie ihrer nicht kompakten Struktur und Oberfläche sind die Gurte in den Retraktoren aber nicht optimal gewickelt. Eine stramme Wicklung Lage auf Lage erfolgt erst dann, wenn die Achse der Wickeltrommel verriegelt ist und eine Zugkraft auf einen Gurt einwirkt. Hierbei nimmt jedoch nicht nur der Durchmesser der gewickelten Gurtpackung ab, sondern auch die Gesamtlänge des gespeicherten Gurts. Das Ergebnis ist ein aus dem Retraktor freigegebener längerer Gurtabschnitt.

In Luftfahrzeugen sind ELR mit Fahrzeugsensibilität nicht praktikabel. Eingesetzt werden könnten nur solche ELR, die auf einen Auszug eines Gurts aus einem Retraktor reagieren. Da raue Flugbewegungen jedoch zu Körperdeplatzierungen relativ zum Sitz führen können, ohne dass die Ansprechwerte derartiger ELR überschritten werden, ist eine sichere Zurückhaltung einer Person im Sitz nicht gewährleistet. Aus diesem Grund sind ELR zumindest im Zusammenwirken mit Beckengurten von in Luftfahrzeugen verwendeten Gurtzeugen nicht erlaubt.

Die US 2 708 555 zeigt eine Wickeltrommel mit einer Trägheitssperre für ein Gurtzeug mit einer manuellen Steuerung auf. Die Wickeltrommel ist mittels der Steuerung entsperrbar.

Aus der US 5 544 363 geht ein Gurtzeug für Personal in Rettungswagen hervor. Das Gurtzeug kann am Fahrzeug über eine Wickeltrommel mit Trägheitssperre befestigt werden.

Der Erfindung liegt - ausgehend vom Stand der Technik - die Aufgabe zugrunde, eine Positionssicherung für abwechselnd sitzende und stehende Personen in Land- und Luftfahrzeugen zu schaffen, die allen notwendigen Bewegungen der Personen während ihres Einsatzes sowohl in stehender oder sitzender Position als auch bei einer Verlagerung aus der sitzenden in die stehende Position und umgekehrt in sicherheitstechnischem Umfang Rechnung trägt.

Diese Aufgabe wird mit den im Anspruch 1 angegebenen Merkmalen gelöst.

Kerngedanke der Erfindung ist der Sachverhalt, dass eine sitzende Person in dieser Position mindestens über die Beckengurthälften so lagegesichert ist, dass die Verdrehbarkeit der Wickeltrommeln in den federunterstützten Retraktoren gegen ein Abspulen der Zugmittel gesperrt ist, d.h., dass die Beckenpartien der Personen fest am Sitz gehalten sind. Dennoch haben die Personen die Möglichkeit, den Oberkörper und damit auch die Arme bewegen zu können, wenn die Schultergurte mit zumindest einem ELR (gurt- oder fahrzeugsensitiv ausgestaltet) am Fahrzeug fixiert sind. Ein bei sitzender Position einer Person dauerhaft gesperrter Retraktor hat die Funktion eines ALR und sichert somit die Person permanent, ohne auf eine Sensorik oder Verzögerungs- bzw. Beschleunigungswerte eines Fahrzeugs angewiesen zu sein. Damit sind die Voraussetzungen auch für die Zulassung in der Luftfahrt geschaffen.

Die mit den Beckengurthälften gekoppelten Retraktoren sind so ausgestaltet, dass der gefährliche Filmspuleneffekt nicht eintreten kann.

Die über die Wickeltrommeln der Retraktoren geführten Zugmittel können die Enden der Beckengurthälften sein. Vorstellbar sind aber auch in die Beckengurthälften in beliebiger Form integrierbare Zugmittel, die von ihrer Konfiguration her von den Gurten abweichen.

Will sich eine zu sichernde Person aus dem Sitz erheben und stehend Handlungen durchführen, so wird von der Person eine Steuerung manuell betätigt, mit deren Hilfe die Sperrstellung der Wickeltrommeln aufgehoben wird. Dies kann unter Einsatz von elektrischer, pneumatischer, hydraulischer oder mechanischer Energie erfolgen. Während der Bewegung aus der sitzenden in die stehende Position ist dennoch weiterhin eine beschleunigungssensorische Auszugssperre in den Retraktoren aktiviert. Diese tritt dann in Funktion, wenn durch plötzliche Verzögerungen oder Beschleunigungen des jeweiligen Fahrzeugs die Standsicherheit der Person gefährdet ist. Diese Auszugssperre verriegelt dann die Retraktoren, so dass die Person in der jeweiligen Position im Gurtzeug sicher gehalten ist. Nach Beendigung der Verzögerungs- oder Beschleunigungsphase kann die Person dann die weitere Verlagerung aus der einen in die andere Position durchführen, sofern die Steuerung zum Aufheben der Sperrstellung der Wickeltrommel noch aktiviert ist.

Erfindungsgemäß erlaubt es die Steuerung darüber hinaus, dass sich die Person in stehender Position, beispielsweise an einer offenen Tür eines Hubschraubers, dauerhaft fixieren kann, indem sämtliche dem Gurtzeug zugeordneten Retraktoren gesperrt sind.

Ferner ist es in der stehenden Position möglich, dass nur die den Beckengurthälften zugeordneten Retraktoren gesperrt sind, wohingegen die den Schultergurten zugeordneten Retraktoren weiterhin als ELR wirksam sind.

Bewegt sich die Person aus der stehenden Position in die sitzende Position, so werden die Gurte automatisch in den Retraktoren aufgespult. Kurz vor Erreichen der sitzenden Position schaltet die Steuerung selbstständig zumindest die den Beckengurthälften zugeordneten Retraktoren in die ALR-Funktion um. Jetzt kann sich die Person nur noch weiter in Richtung auf die sitzende Position bewegen, wobei die Beckengurthälften ständig körpereng gehalten werden und quasi die Sicherheit wie bei einem statischen Beckengurt gewährleistet wird.

Die Erfindung schafft demnach eine Positionssicherung für abwechselnd sitzende und stehende Personen in Land- und Luftfahrzeugen, die den Personen nicht nur permanent die notwendige eigene Standsicherheit gewährleistet, sondern es den Personen auch erlaubt, soweit sie im Sitzen oder Stehen Tätigkeiten durchführen müssen (z.B. Verletzte bergen oder versorgen, Lasten abwerfen, usw.), diese Tätigkeiten sicher erledigen zu können.

Das Zugmittel kann ein gesonderter Gurt sein oder aus dem Ende einer Beckengurthälfte bestehen. In diesem Fall ist es zur Vermeidung des Filmspuleneffekts notwendig, die dauerhafte Sperrung des Retraktors mit einer Gurtklemmeinrichtung zu bewerkstelligen. Vorteilhafter ist es aber gemäß Anspruch 2, dass das Zugmittel die Wickeltrommel wendelförmig umschlingt. Hierzu kann das Zugmittel als Kette, Zahnriemen oder Seil ausgebildet sein. Eine wendelförmige Wicklung vermeidet im Gegensatz zu einer spiralförmigen Wicklung den Filmspuleneffekt und erfordert keine zusätzliche Gurtklemmeinrichtung.

Ein eine Wickeltrommel wendelförmig umschlingendes Zugmittel ist nach Anspruch 3 bevorzugt als Seil ausgebildet. Dieses kann als Stahlseil oder auch als textiles Seil ausgebildet sein. Zur einwandfreien Führung eines solchen Seils auf der Wickeltrommel weist diese eine im Querschnitt gerundete, an die Kontur des Seils angepasste wendelförmige Seilnut auf.

Bei Verwendung einer Kette oder eines Zahnriemens als Zugmittel ist die Oberfläche der Wickeltrommel dann entsprechend gestaltet.

Gemäß den Merkmalen des Anspruchs 4 ist der Wickeltrommel mindestens eine Zahnscheibe zugeordnet, die mit einer an einem Gehäuse des Retraktors gegen die Rückstellkraft einer Feder schwenkbar gelagerten Sperrklinke zusammenwirkt. Bevorzugt weist die Wickeltrommel an beiden Seiten eine Zahnscheibe auf. Folglich ist auch die Sperrklinke so ausgebildet, dass sie dann gleichzeitig mit beiden Zahnscheiben zusammen wirkt. Wird die Rückstellkraft der Feder überwunden, kann sich die Sperrklinke von den Zahnscheiben lösen, so dass dann die Wickeltrommel freigegeben ist.

Damit die Sperrklinke problemlos betätigt werden kann, ist sie nach Anspruch 5 über ein Zugelement mit der Steuerung verbunden. Ein solches Zugelement kann z.B. ein Bowdenzug sein.

Gemäß der Ausführungsform des Anspruchs 6 weist die Sperrklinke einen Rückstellhebel auf, der oberhalb einer vorbestimmten Beschleunigung des Zugmittels unter dem Einfluss einer Trägheitsmasse über eine mit der Wickeltrommel drehende Rastklinke mit einem verzahnten Steuerring zusammenwirkt. Diese weitere Ausgestaltung des Retraktors trägt Sorge dafür, dass bei einer plötzlichen Verzögerung oder Beschleunigung des Fahrzeugs eine frei drehende Wickeltrommel sofort gesperrt wird und ein Abspulen des Zugmittels von der Wickeltrommel nicht mehr möglich ist. Bevorzugt weist der Steuerring eine Innenverzahnung auf. Die Trägheitsmasse ist mit einem Steuerzapfen versehen, welcher die Rastklinke in die Verzahnung des Steuerrings drückt, damit eine weitere Relatiwerdrehung sperrt und zugleich die Sperrklinke in Eingriff mit den Zahnscheiben bringt.

Ein einwandfreies Zusammenwirken zwischen dem Rückstellhebel an der Sperrklinke und dem Steuerring wird gemäß den Merkmalen des Anspruchs 7 dadurch bewirkt, dass der Steuerring eine den Rückstellhebel umgreifende Mitnehmergabel aufweist. Auf diese Weise ist eine nur kurze Schwenkbewegung der Mitnehmergabel notwendig, um den Rückstellhebel zu verdrehen und damit die Sperrklinke mit den Zahnscheiben in Eingriff zu bringen.

Die Merkmale des Anspruchs 8 stellen sicher, dass bei einem nahezu vollständig auf die Wickeltrommel gespulten Zugmittel dieses auf den Taststift drückt und dieser über eine Hebelanordnung die Sperrklinke mit den Zahnscheiben in Eingriff bringt. Dies hat zur Folge, dass nur noch der Rest des Zugmittels aufgespult, jedoch kein Zugmittel mehr zum Abspulen freigegeben wird.

Entsprechend den Merkmalen des Anspruchs 9 weist die Steuerung einen in drei Positionen verlagerbaren Handhebel auf, der über einen Bowdenzug mit jeder Auszugssperre in einem Retraktor verbunden ist. Die Steuerung befindet sich so im Bereich des Tätigkeitsfeldes der zu sichernden Person, dass sie ihn problemlos betätigen kann. In der mittleren Position ist der Handhebel auf Neutral gestellt, d.h. dass die Retraktoren die gewünschten Automatikfunktionen wahrnehmen können, wie sie vorstehend beschrieben worden sind. Wird der Handhebel aus der neutralen Position in die Öffnungsposition verschwenkt, so bedeutet dies eine Entsperrung der Wickeltrommeln in den Retraktoren mit der Folge, dass die Person sich frei aus einer sitzenden Position in eine stehende Position und umgekehrt verlagern kann. Das Verschwenken des Handhebels in die andere Richtung bedeutet die Aktivierung einer Sperrfunktion der Wickeltrommel, z.B. dann, wenn sich die Person an einer offenen Tür eines Hubschraubers befindet und dort tätig sein muss. Die Steuerung ist so aufgebaut, dass eine Verlagerung des Handhebels aus der Neutralposition in die Öffnungsposition automatisch mit einer Rückstellung des Handhebels in die Neutralposition verbunden ist, wenn der Handhebel losgelassen wird. Die Rückführung des Handhebels aus der Sperrposition in die Neutralposition muss jedoch gezielt durchgeführt werden.

Denkbar ist aber auch eine Ausführungsform (Anspruch 10), bei welcher die Steuerung zwei jeweils in zwei Betriebsstellungen verlagerbare Handhebel aufweist, die über Bowdenzüge mit den Auszugssperren verbunden sind. Hierbei sind in der Grundposition des 1. Handhebels die Wickeltrommeln gesperrt und die Sensorfunktion aktiviert, wenn die Person steht. Auch die Grundposition des 2. Handhebels erfüllt diese Funktion, also die Sperrung der Wickeltrommeln in der sitzenden Position der Person und eine Sensorfunktion, wenn die Person steht. Wird der 1. Handhebel verschwenkt, so wird eine Entsperrung der Wickeltrommel herbeigeführt, so dass die Person aufstehen kann. Dazu verbleibt der 2. Handhebel in der Grundposition. Wird hingegen der 2. Handhebel aus der Grundposition verschwenkt, so erfolgt eine Sperrung der Wickeltrommel, wenn die Person sitzt oder steht.

Da die in Rede stehende Positionssicherung häufig für Personen eingesetzt wird, die mit der Versorgung und den Transport von Verletzten befasst sind, besteht leicht die Möglichkeit, dass das Gurtzeug, insbesondere mit Blut, verschmutzt wird. Ein derartig kontaminiertes Gurtzeug muss dann unverzüglich ausgetauscht werden. Dies sollte, insbesondere mit Rücksicht auf einen Katastrophenfall, ohne Zuhilfenahme besonderer Werkzeuge durchgeführt werden können. Dazu sieht die Erfindung gemäß Anspruch 11 vor, dass die Zugmittel lösbar mit den Beckengurthälften gekoppelt sind. Diese Kopplung der Zugmittel mit den Beckengurthälften ist so zu gestalten, dass sie nicht unbemerkt aufgehoben werden kann. Auf der anderen Seite müssen diese Kopplungsbereiche so ausgebildet sein, dass sie leicht und ohne Beschädigungen hervorzurufen auch über die Kanten von Sitzpolstern gleiten können.

Die Erfindung ist nachfolgend anhand eines in den Zeichnungen veranschaulichten Ausführungsbeispiels näher erläutert. Es zeigen:
- Figur 1: in schematischer perspektivischer Darstellung eine Positionssicherung für eine abwechselnd sitzende und stehende Person in einem Land- oder Luftfahrzeug;
- Figur 2: ein Detail der Darstellung der Figur 1 gemäß einer weiteren Ausführungsform;
- Figur 3: in vergrößerter perspektivischer Darstellung den Ausschnitt III der Figur 1 und
- Figur 4: in schematischer perspektivischer Darstellung das Innere eines Retraktors der Positionssicherung der Figur 1.

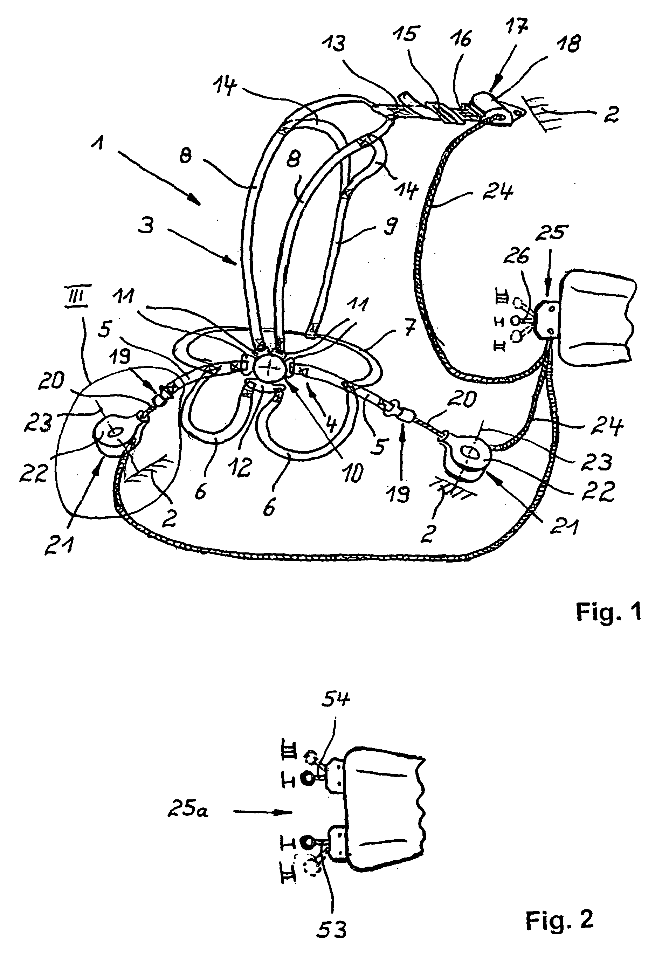

In der Figur 1 ist mit 1 eine Positionssicherung für eine abwechselnd sitzende und stehende Person in einem Land- oder Luftfahrzeug 2, beispielsweise ein Notarztwagen oder ein Hubschrauber (nachfolgend kurz Fahrzeug genannt), bezeichnet.

Die Positionssicherung 1 umfasst zunächst ein Gurtzeug 3 aus einem Beckengurt 4 mit zwei Beckengurthälften 5, zwei Oberschenkelgurten 6, einem Gesäßgurt 7, zwei Schultergurten 8, einem Y-förmigen Rückengurt 9 und einem bauchseitigen Zentralverschluss 10. Die Beckengurthälften 5 und die Schultergurte 8 sind jeweils über eigene Verschlusszungen 11 mit dem Zentralverschluss 10 verbunden. Die mit einem Ende an den Beckengurthälften 5 fixierten Oberschenkelgurte 6 weisen eine gemeinsame Verschlusszunge 12 auf, die in den Zentralverschluss 10 eingesteckt ist. Der Gesäßgurt 7 ist im Bereich der Befestigungen der Oberschenkelgurte 6 ebenfalls an den Beckengurthälften 5 festgelegt.

Die Schultergurte 8 sind im Bereich eines Verankerungsbands 13 zusammengeführt und mit diesem verbunden. Außerdem ist zu erkennen, dass die beiden oberen Längenabschnitte 14 des mit dem Gesäßgurt 7 verbundenen Rückengurts 9 mit den Schultergurten 8 verbunden sind.

Das Verankerungsband 13 ist über eine lösbare Schlaufenverbindung 15 mit einem Gurt 16 eines Emergency Locking Retractors (ELR) 17 verbunden, dessen Gehäuse 18 an das Fahrzeug 2 angelenkt ist.

Die Beckengurthälften 5 sind über lösbare Koppelstellen 19 mit Zugmitteln 20 in Form von Seilen verbunden. Die Zugmittel 20 bilden Bestandteile von Multiple Function Retractors (MFR) 21. Das Gehäuse 22 jedes MFR 21 ist in nicht näher dargestellter Weise um eine Achse 23 schwenkbar mit dem Fahrzeug 2 verbunden.

Vom ELR 17 und von jedem MFR 21 führen Bowdenzüge 24 zu einer Steuerung 25 mit einem Handhebel 26. Der Handhebel 26 ist in nachstehend noch näher erläuterter Weise aus einer neutralen Position I einmal in die eine Richtung in eine Öffnungsposition II und einmal in die andere Richtung in eine Sperrposition III schwenkbar.

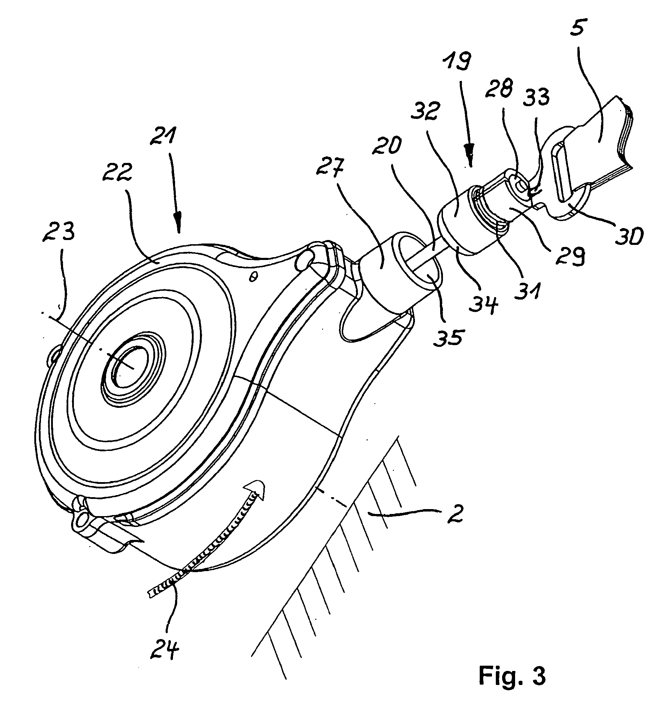

Die Koppelstelle 19 einer Beckengurthälfte 5 mit dem Zugmittel 20 eines MFR 21 ist in der Figur 3 näher veranschaulicht.

Das Gehäuse 22 des MFR 21 weist einen hülsenartigen Seilauslauf 27 auf. Das aus dem Seilauslauf 27 tretende Zugmittel 20 ist mit seinem Ende in eine Seilkausche 28 eingeführt. Die Seilkausche 28 wird von einem rohrförmig gebogenen Abschnitt 29 eines mit einem Ende der Beckengurthälfte 5 verbundenen metallischen Trägers 30 umschlossen. Der rohrförmige Abschnitt 29 ist mit einem Außengewinde 31 versehen. Mittels einer Überwurfmutter 32 wird der rohrförmige Abschnitt 29 auf die Seilkausche 28 gepresst und damit das Zugmittel 20 in der Seilkausche 28 festgelegt.

Die Seilkausche 28 ist durch eine an dem Träger 30 vorgesehene Nase 33 gegen eine axiale Verlagerung gesichert.

An ihrem dem Seilauslauf 27 zugewandten Ende 34 ist die Überwurfmutter 32 gerundet ausgebildet, um bei einem Kontakt mit z.B. einem Sitzpolster weder anzuhaken noch dieses zu beschädigen. Entsprechend der Rundung der Überwurfmutter 32 ist auch das Innere 35 des Seilauslaufs 27 gestaltet.

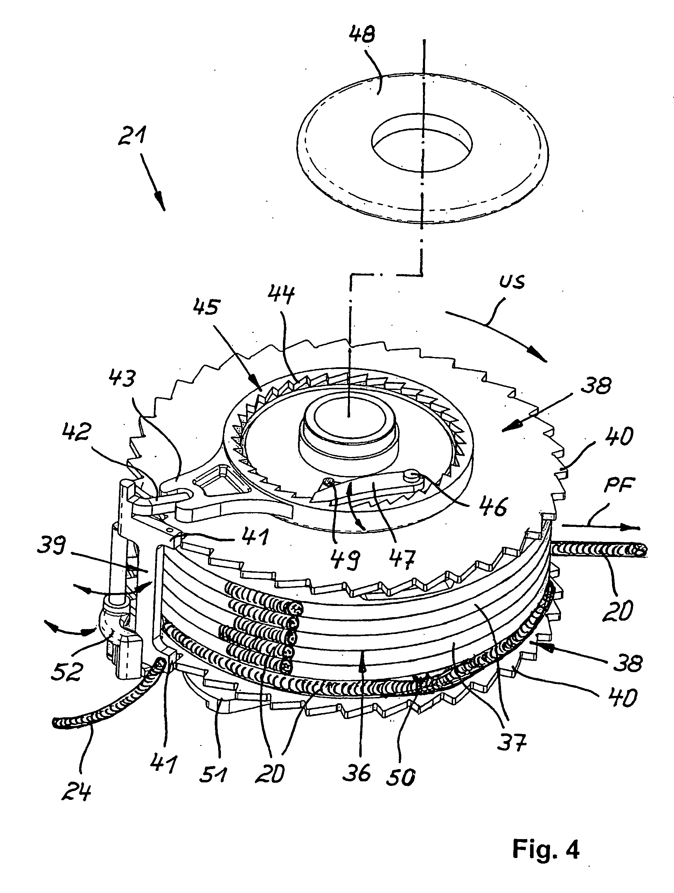

Jeder aus den Figuren 1 und 3 erkennbare MFR 21 umfasst entsprechend der Darstellung der Figur 4 eine federunterstützte drehbare Wickeltrommel 36 mit einer umfangsseitigen gerundeten wendelförmigen Seilnut 37. Die Seilnut 37 ist von ihrem Querschnitt her an den Querschnitt des Zugmittels 20 angepasst. Die Steigung der Seilnut 37 ist gleich dem Durchmesser des Zugmittels 20 bemessen. Das Aufspulen des Zugmittels 20 auf die Wickeltrommel 36 erfolgt - in der Zeichnungsebene gesehen - von oben nach unten entgegen dem Uhrzeigersinn US. Die Abspulrichtung des Zugmittels 20 verläuft in der Zeichnungsebene nach rechts, entsprechend dem Pfeil PF.

Beiderseits der Wickeltrommel 36 befinden sich mit der Wickeltrommel 36 verbundene Zahnscheiben 38. Die Zahnscheiben 38 wirken mit einer am Gehäuse 22 des MFR 21 gegen die Rückstellkraft einer nicht näher veranschaulichten Feder schwenkbar gelagerten Sperrklinke 39 zusammen, welche über in die Verzahnungen 40 der Zahnscheiben 38 eingreifende Klinken 41 verfügt. Dabei sind die Verzahnungen 40 so ausgebildet und die Klinken 41 der Sperrklinke 39 so angeordnet, dass bei einem Eingriff der Klinken 41 in die Verzahnungen 40 eine Verdrehung der Wickeltrommel 36 im Uhrzeigersinn US ausgeschlossen ist.

Die Sperrklinke 39 ist mit einem radial einwärts gerichteten Rückstellhebel 42 versehen, der von einer Mitnehmergabel 43 umgriffen wird. Die Mitnehmergabel 43 bildet Bestandteil eines mit einer Innenverzahnung 44 versehenen Steuerrings 45. Im Innern des Steuerrings 45 ist eine um eine Achse 46 schwenkbare Rastklinke 47 vorgesehen, die mit der Verzahnung 44 des Steuerrings 45 zusammenwirken kann. Die Rastklinke 47 dreht mit der Wickeltrommel 36. Die Verzahnung 44 des Steuerrings 45 ist so ausgebildet, dass bei in die Verzahnung 44 eingreifender Rastklinke 47 eine Verdrehung des Steuerrings 45 gegen den Uhrzeigersinn US ausgeschlossen ist.

Zum MFR 21 gehört ferner eine scheibenförmige Trägheitsmasse 48, die unterseitig mit einem Zapfen 49 versehen ist (in der Figur 4 getrennt von der Trägheitsmasse 48 dargestellt), der, wie nachfolgend noch erläutert, das Einschwenken der Rastklinke 47 in die Verzahnung 44 des Steuerrings 45 bewirkt.

Im Bereich der letzten, in der Zeichnungsebene untersten Windung der Seilnut 37 ist ein Taststift 50 angeordnet, der über eine nicht näher dargestellte Hebelanordnung 51 mit einem Schwenkhebel 52 zusammenwirkt. Wenn beim Aufspulen die letzte Windung der Seilnut 37 mit dem Zugmittel 20 belegt wird, verlagert sich der Taststift 50 unter der Radialbelastung durch das Zugmittel 20 nach innen und verdreht über die Hebelanordnung 51 den Schwenkhebel 52 so, dass dieser die Sperrklinke 39 in die dargestellte Sperrstellung bringt. In dieser Betriebssituation kann das Zugmittel 20 nicht mehr abgespult werden. Es ist nur noch möglich, den Restabschnitt des Zugmittels 20 aufzuspulen.

Wird von der sitzenden Person, die das Gurtzeug 3 benutzt der Handhebel 26 aus der Neutralposition I in die Öffnungsposition II verlagert, so werden über die Bowdenzüge 24 die Wickeltrommeln 36 in den beiden MFR 21 und auch die nicht näher veranschaulichte Wickeltrommel in dem ELR 17 entsperrt, d.h., die Sperrklinken 39 werden außer Eingriff mit den Verzahnungen 40 der Zahnscheiben 38 gebracht. Die Wickeltrommeln 36 sind gegen die Rückstellkraft ihrer nicht näher veranschaulichten Federn frei drehbar. Die Person kann sich von der sitzenden Position in die stehende Position erheben.

Hält die Person den Handhebel 26 in der Öffnungsposition II fest, kann sie sich frei positionieren, wobei über die Rückstellfedern in den MFR 21 und im ELR 17 die Zugmittel 20 und der Retraktorgurt 16 stramm gehalten werden. Lässt sie den Handhebel 26 los, schwenkt dieser von selbst in die Neutralposition I zurück.

Bei einer durch eine entsprechende Bewegung des Fahrzeugs 2 hervorgerufenen plötzlichen Verzögerung oder Beschleunigung der Person, verbunden mit einer Längsbeanspruchung zumindest der Zugmittel 20, verharrt die Trägheitsmasse 48, während die Wickeltrommel 36, bedingt durch den Auszug des Zugmittels 20, weiterdreht. Der Zapfen 49 an der Trägheitsmasse 48 verlagert dann die mit der Wickeltrommel 36 weiterdrehende Rastklinke 47 so, dass sie in die Verzahnung 44 der Steuerrings 45 eingreift. Dieser wird folglich mitgedreht und schwenkt über die Mitnehmergabel 43 den Rückstellhebel 42 in dem Sinne, dass die Klinken 41 der Sperrklinke 39 in die Verzahnungen 40 der Zahnscheiben 38 eingreifen. Ein weiteres Abspulen des Zugmittels 20 wird unterbunden.

Bei Verlagerung des Handhebels 26 in die Sperrposition III wird die Sperrklinke 39 sofort mit den Verzahnungen 40 der Zahnscheiben 38 in Eingriff gebracht, so dass dann keine Verdrehung der Wickeltrommeln 36 in Abspulrichtung PF möglich ist.

Die Figur 2 zeigt eine Variante 25a der Steuerung, wonach ein 1. Handhebel 53 die Veränderung der Neutralposition I in die Öffnungsposition II und ein 2. Handhebel 54 die Veränderung der Neutralposition I in die Sperrposition III übernehmen.

### Bezugszeichenaufstellung

- 1 -: Positionssicherung
- 2 -: Fahrzeug
- 3 -: Gurtzeug
- 4 -: Beckengurt v. 3
- 5 -: Beckengurthälften v. 3
- 6 -: Oberschenkelgurte v. 3
- 7 -: Gesäßgurt v. 3
- 8 -: Schultergurt v. 3
- 9 -: Rückengurt v. 3
- 10 -: Zentralverschluss
- 11 -: Verschlusszungen v. 5 und 8
- 12 -: Verschlusszunge v. 6
- 13 -: Verankerungsband
- 14 -: Längenabschnitte v. 9
- 15 -: Schlaufenverbindung
- 16 -: Gurt v. 17
- 17-: ELR
- 18 -: Gehäuse v. 17
- 19 -: Koppelstellen zwischen 5 und 20
- 20 -: Zugmittel v. 21
- 21 -: MFR
- 22 -: Gehäuse v. 21
- 23 -: Achse v. 21
- 24 -: Bowdenzüge

- 25 -: Steuerung
- 26 -: Handhebel v. 25
- 27 -: Seilauslauf
- 28 -: Seilkausche
- 29 -: Abschnitt v. 30
- 30 -: Träger v. 5
- 31 -: Außengewinde an 29
- 32 -: Überwurfmutter
- 33 -: Nase an 30
- 34 -: Ende v. 32
- 35 -: Inneres v. 27
- 36 -: Wickeltrommel
- 37 -: Seilnut auf 36
- 38 -: Zahnscheiben
- 39 -: Sperrklinke
- 40 -: Verzahnungen v. 38
- 41 -: Klinken v. 39
- 42 -: Rückstellhebel an 39
- 43 -: Mitnehmergabel
- 44 -: Innenverzahnung v. 45
- 45 -: Steuerring
- 46 -: Achse v. 47
- 47 -: Rastklinke
- 48 -: Trägheitsmasse
- 49 -: Zapfen an 48
- 50 -: Taststift
- 51 -: Hebelanordnung
- 52 -: Schwenkhebel
- 53 -: 1. Handhebel v. 25a
- 54 -: 2. Handhebel v. 25a

- PF -: Abspulrichtung v. 20
- US -: Uhrzeigersinn v. 36

- 25a -: Steuerung

## Patentansprüche

1. Positionssicherung für abwechselnd sitzende und stehende Personen in Land- und Luftfahrzeugen (2), welche ein den Körper einer Person umschlingendes Gurtzeug (3) aus einem zweigeteilten Beckengurt (4), zwei Oberschenkelgurten (6), einem Gesäßgurt (7), zwei Schultergurten (8), einem Rückengurt (9) und einem bauchseitigen Zentralverschluss (10) sowie mit den Beckengurthälften (5) und den Schultergurten (8) des Gurtzeugs (3) zusammenwirkende, am Fahrzeug (2) verankerbare Retraktoren (21, 17) aufweist, wobei mindestens die mit den Beckengurthälften (5) zusammenwirkenden Retraktoren (21) jeweils eine in Aufspulrichtung federaktivierte Wickeltrommel (36) für ein mit den Beckengurthälften (5) integrierbares Zugmittel (20) aufweisen, wobei; folgende weitere Merkmale vorgesehen sind:
a) in der sitzenden Position der Person ist die Verdrehbarkeit der Wickeltrommel (36) mindestens gegen ein Abspulen des Zugmittels (20) gesperrt;
b) die Sperrstellung der Wickeltrommel (36) ist über eine manuell betätigbare Steuerung (25, 25a) aufhebbar;
c) bei einer Verlagerung der Person aus der sitzenden in die stehende Position und umgekehrt ist die Wickeltrommel (36) über die Steuerung (25, 25a) frei drehbar eingestellt, sie steht jedoch unter dem Einfluss einer beschleunigungssensorischen Auszugssperre (38, 39);
d) in der stehenden Position der Person ist die Wickeltrommel (36) über die Steuerung (25, 25a) entweder örtlich fixierbar oder unter den Einfluss der Auszugssperre (38, 39) gestellt.

2. Positionssicherung nach Anspruch 1, **dadurch gekennzeichnet, dass** das Zugmittel (20) die Wickeltrommel (36) wendelförmig umschlingt.

3. Positionssicherung nach Anspruch 1 oder 2, **dadurch gekennzeichnet**, das Zugmittel (20) als Seil ausgebildet ist und die Wickeltrommel (36) eine im Querschnitt gerundete wendelförmige Seilnut (37) aufweist.

4. Positionssicherung nach einem der Ansprüche 1 bis 3, **dadurch gekennzeichnet, dass** der Wickeltrommel (36) mindestens eine Zahnscheibe (38) zugeordnet ist, die mit einer an einem Gehäuse (22) des Retraktors (21) gegen die Rückstellkraft einer Feder schwenkbar gelagerten Sperrklinke (39) zusammenwirkt.

5. Positionssicherung nach Anspruch **4, dadurch gekennzeichnet, dass** die Sperrklinke (39) über ein Zugelement (24) mit der Steuerung (25, 25a) verbunden ist.

6. Positionssicherung nach Anspruch 4 oder 5, **dadurch gekennzeichnet, dass** die Sperrklinke (39) einen Rückstellhebel (42) aufweist, der oberhalb einer vorbestimmten Beschleunigung des Zugmittels (20) unter dem Einfluss einer Trägheitsmasse (48) über eine mit der Wickeltrommel (36) drehende Rastklinke (47) mit einem verzahnten Steuerring (45) zusammenwirkt.

7. Positionssicherung nach Anspruch 6, **dadurch gekennzeichnet, dass** der Steuerring (45) eine den Rückstellhebel (42) umgreifende Mitnehmergabel (43) aufweist.

8. Positionssicherung nach einem der Ansprüche 4 bis 7, **dadurch gekennzeichnet, dass** im Bereich der letzten Wickelwindung des Zugmittels (20) ein die Sperrklinke (39) über eine Hebelanordnung (51, 52) beeinflussender Taststift (50) vorgesehen ist.

9. Positionssicherung nach einem der Ansprüche 1 bis 8, **dadurch gekennzeichnet, dass** die Steuerung (25) einen in drei Betriebsstellungen (I, II, III) verlagerbaren Handhebel (26) aufweist, der über einen Bowdenzug (24) mit jeder Auszugssperre (38, 39) verbunden ist.

10. Positionssicherung nach einem der Ansprüche 1 bis 8, **dadurch gekennzeichnet, dass** die Steuerung (25a) zwei jeweils in zwei Betriebsstellungen (I, II; I, III) verlagerbare Handhebel (53, 54) aufweist, die über Bowdenzüge (24) mit jeder Auszugssperre (38, 39) verbunden sind.

11. Positionssicherung nach einem der Ansprüche 1 bis 10, **dadurch gekennzeichnet, dass** die Zugmittel (20) lösbar mit den Beckengurthälften (5) gekoppelt sind.

## Claims

1. System for securing the position of people alternately sitting and standing in landcraft and aircraft (2), the system having a harness (3) which loops around a persons body and comprises a two-part lap strap (4), two thigh straps (6), a backside strap (7), two shoulder straps (8), a back strap (9) and a central fastener (10) on the stomach side and also retractors (21, 17) which interact with the lap strap halves (5) and the shoulder straps (8) of the harness (3) and can be secured on the vehicle (2), with at least the retractors (21) which interact with the lap strap halves (5) each having a winding drum (36), which is spring-activated in the coiling-up direction, for a tension means (20) which can be integrated with the lap strap halves (5), with the following further features being provided:
a) in the sitting position of the person, the rotatability of the winding drum (36) is locked at least against the tension means (20) uncoiling;
b) the locking position of the winding drum (36) can be cancelled via a manually actuable control system (25, 25a);
c) when the person shifts from the sitting position into the standing position and vice-versa, the winding drum (36) is set via the control system (25, 25a) in a manner such that it is freely rotatable, but is under the influence of an acceleration-sensory pull-out lock (38, 39);
d) in the standing position of the person, the control system (25, 25a) causes the winding drum (36) either to be fixable locally or to be under the influence of the pull-out lock (38, 39).

2. Position securing system according to Claim 1, **characterized in that** the tension means (20) loops helically around the winding drum (36).

3. Position securing system according to Claim 1 or 2, **characterized in that** the tension means (20) is designed as a rope, and the winding drum (36) has a helical rope groove (37) which is rounded in cross section.

4. Position securing system according to one of Claims 1 to 3, **characterized in that** the winding drum (36) is assigned at least one tooth lock washer (38) which interacts with a detent pawl (39) mounted pivotably on a housing (22) of the retractor (21) counter to the restoring force of a spring.

5. Position securing system according to Claim 4, **characterized in that** the detent pawl (39) is connected to the control system (25, 25a) via a tension element (24).

6. Position securing system according to Claim 4 or 5, **characterized in that** the detent pawl (39) has a resetting lever (42) which, above a predetermined acceleration of the tension means (20), interacts under the influence of an inertial mass (48) via a latching pawl (47), which rotates together with the winding drum (36), with a toothed control ring (45).

7. Position securing system according to Claim 6, **characterized in that** the control ring (45) has a driver fork (43) engaging around the resetting lever (42).

8. Position securing system according to one of Claims 4 to 7, **characterized in that** a feeler pin (50) which influences the detent pawl (39) via a lever arrangement (51, 52) is arranged in the region of the last winding-drum winding of the tension means (20).

9. Position securing system according to one of Claims 1 to 8, **characterized in that** the control system (25) has a hand lever (26) which can be shifted into three operating positions (I, II, III) and is connected to each pull-out lock (38, 39) via a Bowden cable (24).

10. Position securing system according to one of Claims 1 to 8, **characterized in that** the control system (25a) has two hand levers (53, 54) which can each be shifted into two operating positions (I, II; I, III) and are connected to each pull-out lock (38, 39) via Bowden cables (24).

11. Position securing system according to one of Claims 1 to 10, **characterized in that** the tension means (20) are coupled releasably to the lap belt halves (5).

## Revendications

1. Dispositif pour sécuriser la position de personnes se trouvant alternativement en position debout et assise dans des véhicules routiers et des aéronefs (2), qui présente une sangle (3) entourant le corps d'une personne constituée d'une sangle ventrale (4) divisée en deux, de deux sangles jambières supérieures (6), d'une sangle de siège (7), de deux sangles d'épaule (8), d'une sangle dorsale (9) et d'une fermeture centrale côté abdomen (10), ainsi que de moitiés de sangle abdominale (5) et de sangle d'épaule (8) du dispositif de sangle (3) coopérant sur des dispositifs de rétraction (21, 17) pouvant être ancrés sur le véhicule (2), dispositif dans lequel au moins les dispositifs de rétraction (21) coopérant avec les moitiés de sangle abdominale (5) présentent respectivement un tambour d'enroulement (36) actionné par ressort dans la direction d'enroulement pour un moyen de traction (20) pouvant être intégré avec les moitiés de sangle abdominale (5), dispositif dans lequel sont prévues les autres caractéristiques suivantes :
a) dans la position assise de la personne, la possibilité de rotation du tambour d'enroulement (36) est au moins bloquée contre un déroulement du moyen de traction (20) ;
b) la position de blocage du tambour d'enroulement (36) peut être supprimée par l'intermédiaire d'une commande actionnable manuellement (25, 25a) ;
c) lors d'un déplacement de la personne de la position assise à la position debout et vice versa, le tambour d'enroulement (36) est ajusté par l'intermédiaire de la commande (25, 25a) de façon à être librement rotatif, mais se trouve cependant sous l'influence d'un blocage de sortie (38, 39) sensible à l'accélération ;
d) dans la position debout de la personne, le tambour d'enroulement (36) est ajusté par l'intermédiaire de la commande (25, 25a) soit de façon à pouvoir être localement fixe ou sous l'influence du blocage de sortie (38, 39).

2. Dispositif pour sécuriser la position de personnes selon la revendication 1, **caractérisé en ce que** le moyen de traction (20) entoure de façon hélicoïdale le tambour d'enroulement (36).

3. Dispositif pour sécuriser la position de personnes selon la revendication 1 ou 2, **caractérisé en ce que** le moyen de traction (20) est conçu en tant que câble et le tambour d'enroulement (36) présente une gorge pour câble (37) hélicoïdal arrondie en section transversale.

4. Dispositif pour sécuriser la position de personnes selon l'une quelconque des revendications 1 à 3, **caractérisé en ce que** le tambour d'enroulement (36) comporte au moins une poulie dentée (38) qui coopère avec un cliquet de blocage (39) logé de façon basculante dans un logement (22) du dispositif de rétraction (21), en opposition à la force de rappel d'un ressort.

5. Dispositif pour sécuriser la position de personnes selon la revendication 4, **caractérisé en ce que** le cliquet de blocage (39) est raccordé par l'intermédiaire d'un élément de traction (24) avec la commande (25, 25a).

6. Dispositif pour sécuriser la position de personnes selon la revendication 4 ou 5, **caractérisé en ce que** le cliquet de blocage (39) présente un levier de rappel (42) qui coopère au-dessus d'une accélération prédéterminée du moyen de traction (20) sous l'influence d'une masse d'inertie (48) par l'intermédiaire d'un cliquet de repos (47) tournant avec le tambour d'enroulement (36) avec un anneau de commande denté (45).

7. Dispositif pour sécuriser la position de personnes, **caractérisé en ce que** l'anneau de commande (45) présente une fourche d'entraînement (43) emprisonnant le levier de rappel (42).

8. Dispositif pour sécuriser la position de personnes selon l'une quelconque des revendications 4 à 7, **caractérisé en ce qu'**au niveau du dernier enroulement du moyen de traction (20), est prévue une goupille d'actionnement (50) influençant le cliquet de blocage (38) par l'intermédiaire d'un dispositif à levier (51, 52).

9. Dispositif pour sécuriser la position de personnes selon l'une quelconque des revendications 1 à 8, **caractérisé en ce que** la commande (25) présente un levier manuel (26) déplaçable dans trois positions de fonctionnement (I, II, III), qui est raccordé par l'intermédiaire de câbles Bowden (24) avec chaque blocage de sortie (38, 39).

10. Dispositif pour sécuriser la position de personnes selon l'une quelconque des revendications 1 à 8,
**caractérisé en ce que** la commande (25) comporte deux leviers (53, 54) déplaçables respectivement dans deux positions de fonctionnement (I, II ; I, III), leviers qui sont raccordés à chaque blocage de sortie (38,39) par un câble Bowden (24).

11. Dispositif pour sécuriser la position de personnes selon l'une quelconque des revendications 1 à 10, **caractérisé en ce que** les moyens de traction (20) sont accouplés de façon amovible avec les moitiés de sangle abdominale (5).
